Europäisches Patentamt

European Patent Office

Office européen des brevets

(11) Veröffentlichungsnummer: **0 304 925 B1**

# (12) EUROPÄISCHE PATENTSCHRIFT

(45) Veröffentlichungstag der Patentschrift: **09.12.92**

(51) Int. Cl.⁵: **B01F 7/04**

(21) Anmeldenummer: **88113892.9**

(22) Anmeldetag: **25.08.88**

Die Akte enthält technische Angaben, die nach dem Eingang der Anmeldung eingereicht wurden und die nicht in dieser Patentschrift enthalten sind.

(54) **Mischkneter mit Knetgabeln.**

(30) Priorität: **28.08.87 CH 3322/87**

(43) Veröffentlichungstag der Anmeldung:
**01.03.89 Patentblatt 89/09**

(45) Bekanntmachung des Hinweises auf die Patenterteilung:
**09.12.92 Patentblatt 92/50**

(84) Benannte Vertragsstaaten:
**AT BE DE ES FR GB IT NL SE**

(56) Entgegenhaltungen:
**EP-A- 0 105 436**
**EP-A- 0 220 575**
**CH-A- 661 450**
**DE-A- 2 349 106**

(73) Patentinhaber: **List AG**
**Muttenzerstrasse 107**
**CH-4133 Pratteln 2(CH)**

(72) Erfinder: **Liechti, Pierre**
**Germanenweg 1**
**CH-4132 Muttenz(CH)**

(74) Vertreter: **Weiss, Peter, Dr. rer. nat.**
**Dr. Peter Weiss & Partner Postfach 12 50**
**Zeppelinstrasse 4**
**W-7707 Engen/Hegau(DE)**

EP 0 304 925 B1

**Beschreibung**

Die Erfindung betrifft einen Mischkneter für die mechanische und/oder thermische Behandlung von Produkten entsprechend dem Oberbegriff von Patentanspruch 1.

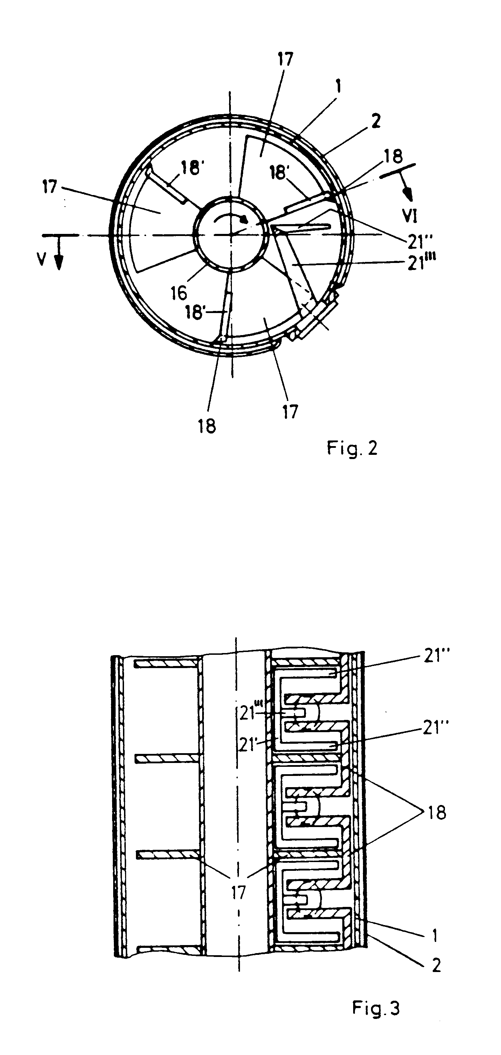

Aus der EP-A 0 220 575 ist ferner eine Misch- und Knetvorrichtung der oben genannten Art bekannt, welche ebenfalls mit feststehenden Knetgegenelementen und an Scheiben befestigten Knetbarren arbeitet. Hier befinden sich sowohl an den Knetbarren als auch an den Knetgegenelementen radiale, wieder zurücklaufende Abschnitte bzw. Knetarme, welche im wesentlichen der Reinigung von den Scheibenflächen bzw. Tragfüssen dienen. Insbesondere aus Fig. 2 ist jedoch deutlich erkennbar, daß das Knetgegenelement so ausgebildet, daß ansich kein Scherspalt gegeben ist. Als Scherspaltähnlich kann lediglich der Bereich zwischen der Gehäuseinnenwand und dem schräg verlaufenden Armteil des Knetgegenelementes bezeichnet werden. Nur in diesem, sehr weiten Bereich findet eine Behandlung des Produktes statt, welche im weiteren Sinne vergleichbar ist mit der Wirkung eines Scherspaltes. Kein Knetspalt ist gegeben zwischen dem scheibenschabenden Teil und der Scheibe sowie zwischen dem schräg verlaufenden Armteil und dem T-Finger. Hier findet lediglich eine entsprechende Abreinigung statt.

Mischkneter der oben genannten Art für absatzweisen oder kontinuierlichen Betrieb sind z.B. bekannt durch die DE-C3-23 49 106 Diese Mischkneter sind zwar sehr robust, können aber bei einigen Produkten, die auf den Knetgegenelementen Zusammenballungen aufbauen, den Prozess stark verlangsamen.

Ferner ist aus der CH-A 661 450 ein Mischkneter ähnlicher Bauart bekannt. Die dort gezeigten Knetgegenelemente sind eine Weiterbildung der aus der DE-C3-23 49 106 bekannten. Die Knetgegenelemente bestehen wiederum aus einem Knetarm, einem Scheibenschaber und einem Wellenschaber. Dabei können Knetarm und Scheibenschaber schräggestellt sein, wodurch eine Verbesserung des Kneteffektes erfolgen soll. Allerdings wird auch mit diesem Knetgegenelement nur ein Knetspalt zwischen Knetarm und Gehäuseinnenwand ausgebildet, durch den ein Mischbarren hindurchbewegt wird.

Der vorliegenden Erfindung liegt die Aufgabe zugrunde, bei Produkten, die zu einer Torusausbildung neigen, dieses Aufbauen und Zusammenballen von Produktmaterial auf den Knetgegenelementen zu verhindern und damit dem Behandlungsprozess für das Produkt zu beschleunigen.

Zur Lösung dieser Aufgabe führt, daß die Knetelemente und Knetgegenelemente derart angeordnet sind, daß zwischen zwei Scheibenelementen jeweils eine Mehrzahl von durch Scheibenelemente und/oder radiale oder radial schräggestellte Knetarme begrenzte, zwischen der Gehäuseinnenwand und der Knetwelle verlaufende, radiale oder radial schräggestellte Scherspalten gebildet sind, welche beim Drehen der Knetwelle mitrotieren, wobei in jeden Scherspalt jeweils ein radialer oder radial schräggestellter Abschnitt oder Tragfuß unter Ausbildung von jeweils zwei radialen oder radial schräggestellten Knetspalten eingreift.

Dieser Erfindungsgegenstand beseitigt die o.g. Schwierigkeiten und hat sich bei der Bearbeitung von schwierigen Produkten als sehr vorteilhaft erwiesen, da die dort über den ganzen Knetraum verteilten, kammartig ineinandergreifenden Knetwerkzeuge durch die Scherwirkung in den verlängerten Knetspalten die Misch- und Knetwirkung verbessern und den Aufbau von Produkten auf den Knetgegenelementen verhindern.

Die Erfindung wird anhand von Zeichnungen näher erläutert. Es zeigen

Fig.1      einen Längsschnitt durch den Mischkneter,

Fig. 2      einen Querschschnitt durch den Mischkneter nach Schnittlinie I - II der Fig. 1,

Fig. 3      einen Teil-Längsschnitt nach Schnittlinie V - VI der Fig. 2,

Fig. 4      einen Querschnitt nach Schnittlinie III - IV der Fig. 1,

Fig. 5      einen Teil-Längsschnitt nach Schnittlinie VII - VIII der Fig. 4,

Fig. 6      einen Teil-Längsschnitt durch den Knetraum mit Knetbarren und Knetgegenelementen, die als Doppelgabeln ausgebildet sind.

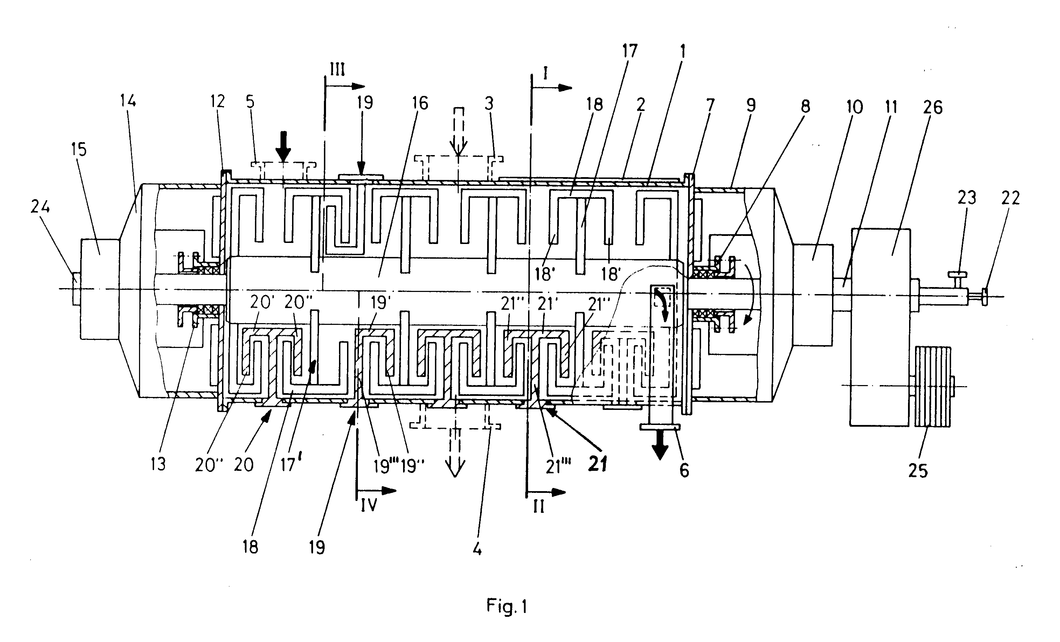

Fig. 1 zeigt den grundsätzlichen Aufbau des Mischkneters bei kontinuierlicher Arbeitsweise.

Das Gehäuse 1 ist mit einem Heizmantel oder Heizkanälen 2 versehen. Das Zudosieren des Ausgangsproduktes im kontinuierlichen Betrieb erfolgt über einen oder mehrere Stutzen 5, der Austrag über einen seitlichen Stutzen mit Ausfallkanal 6. Zum Einfüllen des Ausgangsproduktes im absatzweisen Betrieb sind oben ein oder mehrere Stutzen 3 angeordnet. Das Entleeren erfolgt am unteren Stutzen 4. Die Stutzen 3 dienen im absatzweisen oder im kontinuierlichen Betrieb zugleich für den Abzug von Brüden.

Eine Stirnwand 7 ist mit einer Stopfbüchse 8 ausgerüstet und mit einer Laterne 9 zur Abstützung eines Lagers 10 für einen Knetwellenzapfen 11 verbunden. Eine Stirnwand 12 mit einer Stopfbüchse 13, Laterne 14 und Lager 15 auf der axial gegenüberliegenden Seite ist ähnlich ausgeführt.

In den Lagern 10 und 15 ist eine zentrale Knetwelle 16 mit Wellenzapfen 11 und 24 abgestützt und wird von einem hier nicht gezeigten Antriebsmotor über ein Keilriemenrad 25 und ein Aufsteckgetrieb 26 angetrieben.

Die Knetwelle 16 mit Scheibenelemente 17 ist heiz- oder kühlbar, wobei die Zuführung des Wärmeträgers durch Stutzen 22 und die Rückführung durch Stutzen 23 eines bekannten Zuteilkopfes mit Gleitringdichtungen erfolgt.

Auf dem äusseren Durchmesser der heiz- oder kühlbaren Scheibenelemente 17 sind Knetbarren 18 als annähernd axial entlang der Gehäusewand verlaufende Arme befestigt sowie daran radiale Knetarme 18' angesetzt, die sich soweit als möglich nach innen erstrecken und mit den Scheibenelementen 17 radiale mitrotierende Scherspalten bilden. Schiebenelemente 17, Knetbarren 18 und Knetarme 18' bilden zusammen rotierende Knetelemente 17'. In die Scherspalten greifen jeweils radiale Abschnitte 19'', 20'', 21'' von feststehenden Knetgegenelementen 19, 20, 21 ein, die von radialen Tragfüssen 19''', 20''', 21'''über den annähernd axialen entlang der Knetwelle 16 angeordneten Arm 19', 20', 21'im Gehäuse 1 gehalten sind.

Der in geringem Abstand am Gehäuse 1 vorbeilaufende Knetbarren 18 übernimmt die Abreinigung des Gehäuses 1. Die in geringem Abstand an der Knetwelle 16 und den Scheibenelementen 17 angeordneten Arme 19', 20', 21', übernehmen das Abreinigen der Knetwelle 16, die radialen Abschnitte 19'', 20'', 21'' reinigen die Oberflächen der Scheibenelemente 17 und wirken zusammen mit den Tragfüssen 19''', 20''', 21''' als Stromstörer gegenüber den rotierenden und das Produkt umwälzenden Knetbarren 18 und Knetarmen 18'.

Besonders bei Pasten werden beim Eingreifen der rotierenden radialen Knetarme 18' in die radialen statischen Abschnitte 19'', 20'', 21'' grosse Scherkräfte auf das Produkt ausgeübt. Die über die ganze Fläche des Knetraumes zwischen den Scheiben verteilten Scherspalten gewährleisten, dass die durch die Scherkräfte ausgelöste kräftige Gutsbewegung einen Aufbau des Produktes weitgehend verhindert.

Die Fig. 2 zeigt den scherenden Eingriff der radialen Knetarme 18' der rotierenden Knetbarren 18 zwischen die radialen Tragfüsse 21''' und den radialen Abschnitt 21''.

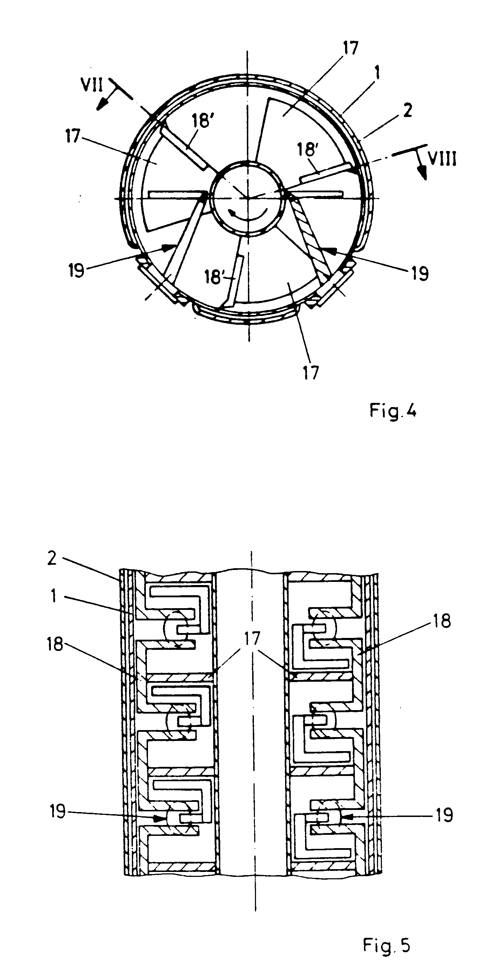

In Fig. 3 sind die durch diese Anordnung der Knetwerkzeuge erzeugten langen Knetspalten ersichtlich. Die sowohl in Fig. 3 als auch in Fig. 5 gezeigten statischen radialen Tragfüsse 21''' sind durch die Schrägstellung nur verkürzt sichtbar.

Fig. 4 zeigt eine Ausführungsform mit nur einseitig ausgebildeten Knetgegenelementen 19, die hier entlang von zwei achsparallelen Mantellinien des Gehäuses 1 angeordnet sind.

In dem zu Fig. 4 gehörenden Teil-Längsschnitt Fig.5 ist ersichtlich, dass bei der einseitigen Ausführungsform der Knetgegenelemente 19 jeweils zwei sich gegenüberstehende spiegelbildliche Knetgegenelemente zwischen zwei benachbarten Scheibenelementen 17 notwendig sind, um beide Scheibenflächen zu reinigen. Damit wird einerseits die Abreinigung der Scheibenelemente 17 und der Knetwelle 16 in einem solchen Knetraum auf zwei Werkzeuge aufgeteilt, andererseits werden spezifisch durch den zusätzlichen Tragfuss des zusätzlichen Knetgegenelementes mehr Knetspalte gebildet, wobei sich die Aufteilung auf zwei Knetgegenelemente auch positiv auf die Kraftverteilung bei hochviskosen Produkten auswirkt.

Normalerweise sind die Knetbarren 18 in der Bewegungsrichtung gesehen, an den Vorderkanten der Scheibenelemente 17 angesetzt. Es hat sich jedoch gezeigt, dass man die Knetbarren 18 auch an die Rückkante der Scheibenelemente oder zwischen Vorder- und Rückkante befestigen kann, um die Kraftspitzen besser auf eine Umdrehung der Knetwelle 16 zu verteilen.

Die Kraftspitzen können dadurch besser verteilt werden, dass die radialen Knet- und Knetgegenelemente in den radialen Ebenen gebogen sind, so dass bei gegenseitigem Durchgang ein scherenartiger Effekt entsteht.

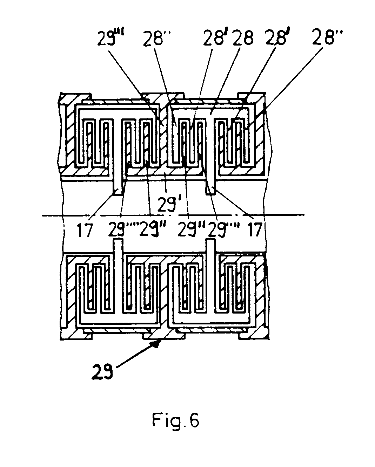

Fig. 6 zeigt eine Variante, bei der die rotierenden Knetbarren 28 mit zusätzlichen rotierenden radialen Knetarmen 28'' neben den Knetarmen 28' versehen sind. Ebenso haben die dazugehörigen feststehenden Knetgegenelemente 29 an dem Arm 29' neben den radialen Abschnitten 29'' zusätzliche Abschnitte 29''''. Diese Anordnung erlaubt zwischen zwei Scheibenflächen zehn Knetspalten anstelle von nur sechs in den vorherigen Figuren.

Eine weitere Erhöhung der Misch- und Knetwirkung ergibt sich durch eine grössere Anzahl von Knetgegenelementen, die entsprechend auf den Umfang des Knetraumes zwischen den Scheibenflächen verteilt sind.

Sowohl die Elemente 18' wie auch die Knetgegenelemente 19'',20'',21'' bzw. die Tragfüsse 19''',20''',21''' sind normalerweise radial angeordnet. Sie können aber auch radial schräggestellt sein, so dass auch radial schräggestellte Knetspalte entstehen.

**Positionszahlenliste**

| | |
|---|---|
| 1 | Gehäuse |
| 2 | Heizmantel |
| 3 | Stutzen |
| 4 | unterer Stutzen |
| 5 | Stutzen |
| 6 | Ausfallkanal |
| 7 | Stirnwand |
| 8 | Stopfbüchse |
| 9 | Laterne |
| 10 | Lager |

| 11 | Knetwellenzapfen |
| 12 | Stirnwand |
| 13 | Stopfbüchse |
| 14 | Laterne |
| 15 | Lager |
| 16 | Knetwelle |
| 17 | Scheiben 17' Knetelement |
| 18 | Knetbarren 18' Knetarm |
| 19 | Knetgegenelement 19' Arm 19''radialer Abschnitt 19''' Tragfuss |
| 20 | Knetgegenelement 20' Arm 20''radialer Abschnitt 20''' Tragfuss |
| 21 | Knetgegenelement 21' Arm 21''radialer Abschnitt 21''' Tragfuss |
| 22 | Stutzen |
| 23 | Stutzes |
| 24 | Wellenzapfen |
| 25 | Keilriemenrad |
| 26 | Aufsteckgetriebe |
| 28 | Knetbarren 28' und 28'' Knetarme |
| 29 | Knetgegenelement 29' Arm 29'' Abschnitt 29''' Tragfuss 29'''' Abschnitt |

## Patentansprüche

1. Absatzweise oder kontinuierlich arbeitender Mischkneter für mechanische und/oder thermische Behandlung von Produkten in flüssigem, pastösem und rieselfähigem Zustand, mit oder ohne Zu- und Abführung von Gasen oder Dämpfen, mit einem horizontalen oder geneigten heiz- oder kühlbaren, kreiszylindrischen Gehäuse (1) mit einer mit der Gehäuseachse gleichachsig verlaufenden Knetwelle (16), mit auf deren Zentralrohr in Ebenen senkrecht zu ihrer Achse aufgesetzten heiz- oder kühlbaren Scheibenelementen (17) auf denen am äusseren Durchmesser mitrotierende Knetbarren (18; 28) befestigt sind, wobei jeder dieser Knetbarren (18; 28) in geringem Abstand von der Innenwand des Gehäuses (1) und annähend parallel zu dieser angeordnet ist, sowie einen oder mehrere an ihm befestigte, gegen die Knetwelle (16) so weit als möglich von aussen nach innen reichende Knetarme (18', 28', 28'') aufweist, und mit in der Innenwand des gehäuses (1) befestigten Knetgegenelementen (19,20,21;29) aus einem Tragfuss (19''', 20''', 21'''; 29'''), daran annähernd axial entlang einer Knetwelle (16) angeordnetem Arm (19', 20', 21'; 29') und daran wieder zur Gehäuseinnenwand hin abragendem Abschnitt (19'', 20'', 21''; 29''), dadurch gekennzeichnet, daß die Knetelemente (17';) und Knetgegenelemente (19,20,21;29) derart angeordnet sind, daß zwischen zwei Scheibenelementen (17) jeweils eine Mehrzahl von durch Scheibenelemente (17) und/oder radiale oder radial schräggestellte Knetarme (18';28',28'')) begrenzte, zwischen der Gehäuseinnenwand und der Knetwelle (16) verlaufende, radiale oder radial schräggestellte Scherspalten gebildet sind, welche beim Drehen der Knetwelle (16) mitrotieren, wobei in jeden Scherspalt jeweils ein radialer oder radial schräggestellter Abschnitt (19'',20'',21'';29'',29'''') oder Tragfuß (19''',20''',21''';29'''') unter Ausbildung von jeweils zwei radialen oder radial schraggestellten Knetspalten eingreift.

2. Mischkneter nach Anspruch 1, dadurch gekennzeichnet, dass der Tragfuss (21''') des Knetgegenelementes (19, 20, 21) sekantial oder tangential zur Knetwelle (16) verläuft, wobei dann die Abschnitte (21'') vom Ende des Tragfusses (21'') etwa radial zur Gehäuseinnenwand hin verlaufen.

3. Mischkneter nach Anspruch 1 oder 2, dadurch gekennzeichnet, dass die rotierenden Knetbarren (18) axial nur einseitig auf den Scheibenelementen (17) aufgesetzt sind.

4. Mischkneter nach Anspruch 1 oder 2, dadurch gekennzeichnet, dass die rotierenden Knetbarren (18, 28) symmetrisch zu beiden Seiten der Scheibenelemente (17) aufgesetzt sind.

5. Mischkneter nach wenigstens einem der Ansprüche 1 - 4, dadurch gekennzeichnet, dass die Abschnitte (19'', 20'', 21''; 29'') symmetrisch zu beiden Seiten des Tragfusses (19''', 20''', 21'''; 29''') angeordnet sind.

6. Mischkneter nach wenigstens einem der Ansprüche 1 - 5, dadurch gekennzeichnet, dass die annähernd axialen, auf dem Aussendurchmesser der Scheibenelemente (17) angeordneten Knetbarren (18) an einer beliebigen Stelle des Aussenumfanges der Scheiben (17) angeordnet sind.

## Claims

1. Batchwise or continuously operating kneader-mixer for mechanical and/or thermal treatment of products in a liquid, pasty and free-flowing state, with or without the supply and discharge of gases or vapour, with a horizontal or inclined heatable or coolable circular cylindrical housing (1) with a kneading shaft (16) extending along the same axis as the housing, with heatable or coolable disc elements (17) which are placed on the central tube thereof in planes perpendicular to the axis thereof, on which co-rotating kneading bars (18; 28) are fastened at the external diameter, wherein each of these kneading bars (18; 28) is arranged at a short distance from and substantially parallel to the internal wall of the housing (1) and has one or more kneading arms (18', 28', 28'') which are fastened thereon and extend as far as possible inwardly from the exterior toward the kneading shaft (16), and with opposing kneading elements (19, 20, 21; 29) fastened in the internal wall of the housing (1) and consisting of a carrying foot (19''', 20''', 21'''; 29'''), an arm (19', 20', 21'; 29') arranged thereon substantially axially along a kneading shaft (16) and a portion (19'', 20'', 21''; 29'') again projecting thereon toward the internal housing wall, characterised in that the kneading elements (17') and opposing kneading elements (19, 20, 21; 29) are arranged such that between two respective disc elements (17) there are formed a plurality of radial or radially obliquely set shearing gaps which are limited by disc elements (17) and/or radial or radially obliquely set kneading arms (18'; 28', 28''), extend between the internal housing wall and the kneading shaft (16) and co-rotate during the rotation of the kneading shaft (16), wherein a respective radial or radially obliquely set portion (19'', 20'', 21''; 29'', 29'''') or carrying foot (19''', 20''', 21'''; 29'''') engages in each kneading gap so as to form two respective radial or radially obliquely set kneading gaps.

2. Kneader-mixer according to claim 1, characterised in that the carrying foot (21''') of the opposing kneading element (19, 20, 21) extends as a secant or tangent to the kneading shaft (16), the portions (21'') extending from the end of the carrying foot (21'') substantially radially to the internal housing wall.

3. Kneader-mixer according to claim 1 or 2, characterised in that the rotating kneading bars (18) are placed axially onto the disc elements (17) only on one side.

4. Kneader-mixer according to claim 1 or 2, characterised in that the rotating kneading bars (18, 28) are placed symmetrically on both sides of the disc elements (17).

5. Kneader-mixer according to at least one of claims 1 to 4, characterised in that the portions (19'', 20'', 21''; 29'') are arranged symmetrically on both sides of the carrying foot (19''', 20''', 21'''; 29''').

6. Kneader mixer according to at least one of claims 1 to 5, characterised in that the substantially axial kneading bars (18) arranged on the external diameter of the disc elements (17) are arranged at a random point on the external periphery of the discs (17).

**Revendications**

1. Malaxeur travaillant en continu ou en discontinu pour traiter mécaniquement ou thermiquement des produits à l'état pâteux, liquide ou pouvant s'écouler, avec ou sans arrivée et départ de gaz, ou de vapeurs, avec un carter (1) horizontal ou incliné cylindrique circulaire pouvant être chauffé ou refroidi avec un arbre de malaxage (16) coaxial à l'axe de carter, avec des éléments de disque (17) pouvant être chauffés ou refroidis placés sur son tube central dans des plans perpendiculaires à son axe, sur lesquels sont fixées sur le diamètre extérieur des barres de malaxage (18 ; 28) qui tournent avec ; chacune de ces barres de malaxage (18 ; 28) étant placée à faible distance de la paroi interne du carter (1) et presque parallèlement à lui, ainsi que un ou plusieurs bras de malaxage (18', 28', 28'') fixés sur elles dirigés vers l'intérieur, aussi loin que possible vers l'arbre de malaxage (16), et avec des contre-éléments (19, 20, 21 ; 29) fixés dans la paroi interne du carter (1), s'étendant depuis un pied porteur (19''', 20''', 21'''; 29''') puis approximativement axialement, il y a le long d'un arbre de malaxage (16) un bras (19', 20', 21' ; 29'), puis à nouveau une section s'étend vers la paroi interne de carter (19'', 20'', 21'' ; 29''), caractérisé en ce que les éléments de malaxage (17') et les contre-éléments de malaxage (19, 20, 21 ; 29) sont disposés de telle façon qu'entre deux éléments de disque (17) se trouvent plusieurs bras de cisaillement s'étendant radialement ou en biais radialement limitées par des éléments de disque (17) et/ou des bras de malaxage (18' ; 28', 28'') placés radialement ou en biais radialement, qui tournent avec l'arbre de malaxage (16), et dans chaque fente de malaxage se trouve une pièce radiale ou placée en biais radialement (19'', 20'', 21'' ; 29'', 29''') ou un pied porteur (19''', 20''', 21''' ; 29'''') en formant de chaque côté deux fentes de malaxage disposées radialement ou en biais radialement.

2. Malaxeur selon la revendication 1, caractérisé en ce que le pied porteur (21''') du contre-élément de malaxage (19, 20, 21) est sécant ou tangentiel vis-à-vis de l'arbre de malaxage (16), les pièces (21'') s'étendant approximativement radialement depuis, l'extrémité du pied porteur (21'') vers la paroi interne de carter.

3. Malaxeur selon la revendication 1 ou 2, caractérisé en ce que les barres de malaxage tournantes (18) ne sont placées axialement que d'un côté aux éléments de disques (17).

4. Malaxeur selon la revendication 1 ou 2, caractérisé en ce que les barres de malaxage tournantes (18, 28) sont symétriques par rapport aux deux côtés des éléments de disques (17).

5. Malaxeur selon au moins l'une des revendications 1-4, caractérisé en ce que les pièces (19", 20", 21" ; 29") sont disposées symétriquement de chaque côté du pied porteur (19"', 20"', 21"' ; 29"').

6. Malaxeur selon au moins l'une des revendications 1-5, caractérisé en ce que les barres de malaxage (18) disposées approximativement axialement sur le diamètre extérieur des éléments de disque (17) sont disposées en tout point souhaité de la périphérie externe des disques (17).

Fig. 1

Fig. 2

Fig. 3

Fig. 4

Fig. 5

Fig. 6